# EUROPÄISCHE PATENTSCHRIFT

(11) **EP 1 318 062 B1**
(45) Veröffentlichungstag und Bekanntmachung des Hinweises auf die Patenterteilung: **22.10.2008**
(21) Anmeldenummer: 02026627.6
(22) Anmeldetag: 29.11.2002
(51) Int. Cl.: B62D 21/15, B60R 21/34

(54) **Strukturbauteil für ein Kraftfahrzeug**
Structural element for a motor vehicle
Elément de structure pour un véhicule automobile

(30) Priorität: 04.12.2001 DE 10159491
(43) Veröffentlichungstag der Anmeldung: 11.06.2003
(73) Patentinhaber: Benteler Automobiltechnik GmbH & Co. KG, 33104 Paderborn (DE)
(72) Erfinder: Franke, Wolfgang, 33154 Salzkotten (DE); Fischer, Jochem, 73760 Ostfildern (DE)
(74) Vertreter: Ksoll, Peter

(56) Entgegenhaltungen:
- EP-A- 0 992 418
- EP-A- 1 022 199
- DE-A- 19 851 489
- DE-A- 19 944 437
- GB-A- 2 195 586
- GB-A- 2 341 147

## Beschreibung

Die Erfindung betrifft ein Strukturbauteil für ein Kraftfahrzeug, welches einen metallischen Grundkörper aufweist.

Crashrelevante Strukturbauteile von Kraftfahrzeugen sind beispielsweise Stoßfänger, Motorhauben, Seitenaufprallschutzbauteile, A-, B-, C-Säulen und ähnliche bei einem Zusammenstoß beanspruchte Bauteile. Diese dienen unter anderem dazu, im Falle eines Zusammenstoßes Aufprallenergie in Deformationsenergie umzuwandeln. Hierbei verformen sich die Bauteile.

Es sind verschiedene Maßnahmen zur Steigerung des Energieabsorptionsvermögens von Strukturbauteilen bekannt, so beispielsweise das partielle Ausschäumung der Bauteile und ähnliches.

So geht aus der GB 2 341 147 A eine Motorhaube für ein Kraftfahrzeug hervor, die einen metallischen Grundkörper mit zwei im Abstand zueinander angeordneten Wänden und zumindest einer sich an den Wänden abstützenden polygonalen Struktur aufweist.

Aus der GB 2 195 586 A ist ein aufprallabsorbierender Stoßfänger bekannt, der zwei durch federelastische Rohre beabstandete Wände aufweist. Die Rohre weisen T-förmige Projektionen auf, die formschlüssig in Nuten in den Wänden eingesteckt sind.

Hier werden weitere Verbesserungsmöglichkeiten gesehen, um den passiven Passantenschutz bei einem Kraftfahrzeug weiter zu erhöhen.

Der Erfindung liegt daher ausgehend vom Stand der Technik die Aufgabe zugrunde, crashrelevante Strukturbauteile bei gewichts- und kostensparender Bauweise funktionstechnisch zu verbessern.

Die Lösung dieser Aufgabe besteht nach der Erfindung in einem Strukturbauteil gemäß den Merkmalen von Patentanspruch 1.

Danach besitzt das Strukturbauteil einen metallischen Grundkörper mit zwei im Abstand zueinander angeordneten Wänden, zwischen denen zumindest ein elastischer Walkkörper angeordnet ist, der sich an den Innenseiten der Wände abstützt. Im Kontaktbereich zwischen den Innenseiten der Wände und dem Walkkörper ist eine eine Relativverlagerung bzw. -verschiebung der Teile zulassende Verbindung vorgesehen.

Die Verbindung zwischen dem Grundkörper bzw. dessen Wänden und dem Walkkörper lässt bei einer Deformation eine Relativbewegung zwischen den Teilen zu. Durch die Relativbewegung wird bereits Aufprallenergie abgebaut, bevor sich der Grundkörper bzw. das Strukturbauteil insgesamt plastisch verformt.

Die Aufprallenergie wird zumindest teilweise in Walk- bzw. Reibenergie umgewandelt. Durch die Verbesserung des erfindungsgemäßen Strukturbauteils kann der Grundkörper weniger fest gestaltet werden, wodurch Gewichtsund Kosteneinsparungen erreichbar sind. Überdimensionierungen der Strukturbauteile können infolge zusätzlichen Energieabsorptionsvermögens reduziert bzw. sogar gänzlich vermieden werden.

Bei einem erfindungsgemäßen Strukturbauteil kann es sich beispielsweise um eine Motorhaube handeln. Kommt es zu einem Zusammenprall mit einer Person, bei dem diese mit dem Kopf auf die Motorhaube aufschlägt, verformt sich zunächst die äußere Wand bzw. Haut der Motorhaube unter walkender Bewegung. Hierbei kommt es zu einer Relativbewegung zwischen der äußeren metallischen Wand und dem innen angeordneten Walkkörper.

Hierdurch kann die Knickbelastung am Kopf der aufprallenden Person vermindert werden.

Die Verbindung zwischen dem Walkkörper und den Innenseiten der Wände kann reib- und/oder formschlüssig erzeugt sein, wie dies Patentanspruch 2 vorsieht. Eine vorteilhafte Ausgestaltung einer solchen Verbindung zwischen Walkkörper und Grundkörper sieht nach Patentanspruch 3 eine Klebefügung vor.

Der Grundkörper besteht aus Metall. Insbesondere handelt es sich um ein Stahlblechbauteil. Der bzw. die Walkkörper besteht aus einem elastischen Material, insbesondere einem Kunststoff oder Gummi. Denkbar ist die Verwendung eines schubbeanspruchbaren Elastomers.

Für die Praxis verspricht ein Walkkörper Vorteile, dessen Innenraum unter Überdruck steht.

Die Erfindung ist nachfolgend anhand eines in den Zeichnungen dargestellten Ausführungsbeispiels näher beschrieben. Es zeigen:
- Figur 1: in der Draufsicht ein erfindungsemäßes Strukturbauteil;
- Figur 2: eine erste Ausführungsform eines Strukturbauteils in einer Schnittdarstellung entlang der Linie A-A durch die Figur 1;
- Figur 3: eine zweite Ausführungsform eines Strukturbauteils in einer Schnittdarstellung entlang der Linie A-A durch die Darstellung der Figur 1;
- Figur 4: ein erfindungsgemäßes Strukturbauteil in Form einer Motorhaube in einem Längsschnitt;
- Figur 5: einen Querschnitt durch die Darstellung der Figur 4 entlang der Linie A-A;
- Figur 6: im Querschnitt einen Walkkörper vor der Deformation und
- Figur 7: den Walkkörper gemäß der Figur 6 nach einer Deformation.

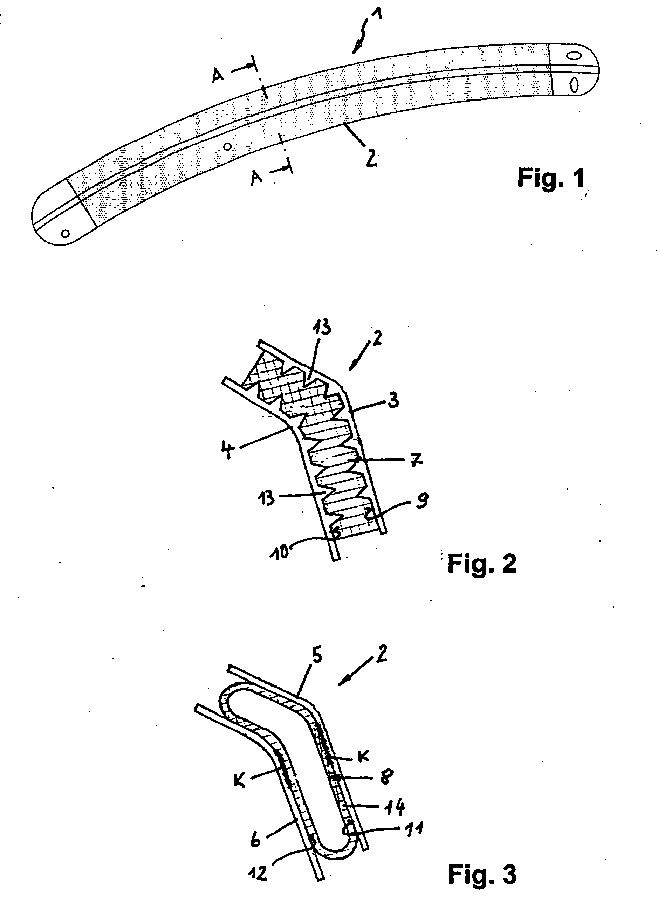

Die Figur 1 zeigt ein crashrelevantes Strukturbauteil 1 für ein Kraftfahrzeug. Hierbei kann es sich um einen Querträger eines Stoßfängers, um Seitenaufprallschutzbauteile oder auch eine A-, B- oder C-Säule handeln. Das Strukturbauteil 1 weist einen metallischen Grundkörper 2 auf, der den jeweiligen konstruktiven Einsatzbedingungen im Kraftfahrzeug entsprechend geformt ist und aus Stahlblech besteht.

Die Figuren 2 und 3 zeigen zwei Ausführungsformen des Strukturbauteils 1. Der Grundkörper 2 umfasst jeweils zwei im Abstand zueinander angeordnete Wände 3, 4 bzw. 5, 6. Zwischen den Wänden 3, 4 bzw. 5, 6 ist zumindest ein Walkkörper 7 bzw. 8 eingegliedert, welcher sich jeweils an den Innenseiten 9, 10 bzw. 11, 12 der Wände 3, 4 bzw. 5, 6 abstützt. Die Abstützung im Kontaktbereich zwischen den Wänden 3, 4; 5, 6 und dem Walkkörper 7; 8 lässt eine Relativverlagerung der Teile untereinander zu.

Im Falle einer Deformation infolge eines Anpralls kann durch die Relativbewegung zwischen Grundkörper 2 bzw. der Wände 3, 4 oder 5, 6 und dem Walkkörper 7 bzw. 8 bereits Aufprallenergie abgebaut werden. Erst bei Überschreiten des elastischen Energieabsorptionsvermögens des Systems verformt sich das Strukturbauteil 1 plastisch. Infolge dessen kann der Grundkörper 2 des Strukturbauteils 1 weniger fest gestaltet werden. Hierdurch ist eine Gewichts- und Kosteneinsparung realisierbar.

Die Verbindung des Walkkörpers 7 mit den Wänden 3, 4 ist form- und reibschlüssig. Hierzu sind an den Innenseiten 9 bzw. 10 Widerlager in Form von Rippen 13 ausgebildet.

Bei dem Walkkörper 8 handelt es sich um einen elastischen Hohlkörper 14. Dieser ist mit einem Gas befüllt und steht unter Überdruck.

Die Verbindung zwischen dem Walkkörper 8 und den Innenseiten 11 bzw. 12 erfolgt reibschlüssig. Diese wird durch eine adhäsive Klebefügung in den Bereichen K unterstützt.

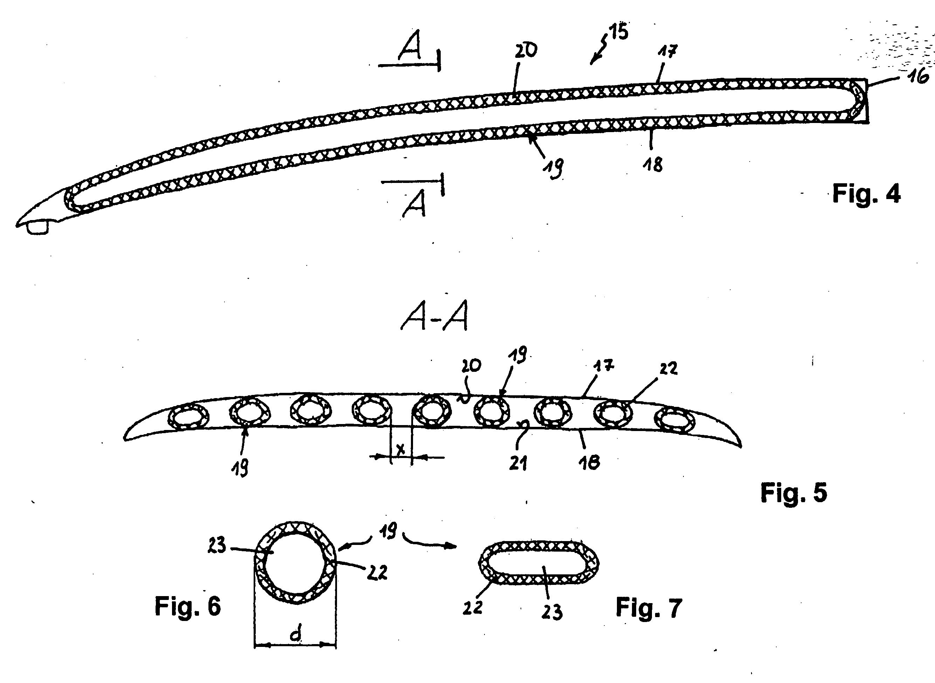

Die Figur 4 zeigt ein Strukturbauteil, nämlich eine Motorhaube 15 im Längsschnitt. Die Motorhaube 15 weist einen einen Hohlraum einschließenden Grundkörper 16 auf mit einer äußeren Wand 17 und einer im Abstand hierzu angeordneten inneren Wand 18. Wie man in der Zusammenschau der Figuren 4 und 5 erkennt, sind in Längserstreckung der Motorhaube 15 in Nebeneinanderanordnung eine Reihe langgestreckter Walkkörper 19 zwischen der Innenseite 20 der Wand 17 und der Innenseite 21 eingegliedert. Bei den Walkkörpem 19 handelt es sich um allseitig geschlossene Schläuche 22 aus elastischem Material, deren Innenraum 23 gasbefüllt ist. Anhand der Figur 4 wird deutlich, dass sich die Schläuche 22 nahezu über die gesamte Länge der Motorhaube 15 erstrecken.

Die Figur 6 zeigt einen solchen Schlauch 22 im Querschnitt in undeformiertem Zustand, wohingegen die Figur 7 denselben Schlauch 22 nach bzw. bei einer Deformation darstellt.

Der Durchmesser d eines Schlauchs 22 ist so bemessen, dass dieser zwischen der Innenseite 20 der Wand 17 und der Innenseite 21 der Wand 18 reibschlüssig eingespannt sind. Der Kontakt ist dergestalt, dass bei einer äußeren Belastung der Motorhaube 15 zumindest eine Relativbewegung zwischen der Wand 17 bzw. deren Innenseite 20 und den Walkkörpern 19 erfolgt.

Der Abstand x zwischen den einzelnen Walkkörpern 19 ist so bemessen, dass diese bei einem Anprall unter dem Druck der äußeren Wand 17 in eine langgestreckte Querschnittskonfiguration zusammengedrückt werden können, wie dies Figur 7 zeigt. Dies kann so weit geschehen, bis sich die Walkkörper 19 untereinander kontaktieren. Hierbei kommt es zu einer reibschlüssigen Relativbewegung zwischen der Innenseite 20 der Wand 17 und den Walkkörpern 19. Auch zwischen der Innenseite 21 der unteren Wand 18 und den Walkkörpern 19 kann es zu einer Relativverlagerung kommen. Durch die Bewegung zwischen den Teilen wird im Falle eines Anpralls einer Person bereits ein Teil der Anprallenergie in Walk- und Reibenergie umgewandelt. Hierdurch kann die Belastung auf die Passanten, insbesondere bei einem Kopfaufschlag, reduziert werden.

### Bezugszeichenaufstellung

- 1 -: Strukturbauteil
- 2 -: Grundkörper
- 3 -: Wand
- 4 -: Wand
- 5 -: Wand
- 6 -: Wand
- 7 -: Walkkörper
- 8 -: Walkkörper
- 9 -: Innenseite v. 3
- 10 -: Innenseite v. 4
- 11 -: Innenseite v. 5
- 12 -: Innenseite v. 6
- 13 -: Rippe
- 14 -: Hohlkörper
- 15 -: Motorhaube
- 16 -: Grundkörper
- 17 -: äußere Wand v. 16
- 18 -: innere Wand v. 16
- 19-: Walkkörper
- 20 -: Innenseite v. 17
- 21 -: Innenseite v. 18
- 22 -: Schlauch
- 23 -: Innenraum v. 22

- d -: Durchmesser v. 19
- K -: Klebebereich

## Patentansprüche

1. Strukturbauteil für ein Kraftfahrzeug, das einen metallischen Grundkörper (2; 16) mit zwei im Abstand zueinander angeordneten Wänden (3, 4; 5, 6; 17, 18) und zumindest einen sich an den Innenseiten (9, 10; 11, 12; 20, 21) der Wände (3, 4; 5, 6; 17, 18) abstützenden Walkkörper (7; 8; 19) aufweist, wobei der Walkkörper (7; 8; 19) und die Innenseiten (9, 10; 11, 12; 20, 21) der Wände (3, 4; 5, 6; 17, 18) einander relativ verlagerbar kontaktieren, **dadurch gekennzeichnet, dass** der Walkkörper (8, 19) durch einen allseitig geschlossenen Schlauch (22) aus elastischem Material gebildet ist, dessen Innenraum (23) gasbefüllt ist.

2. Strukturbauteil nach Anspruch 1, **dadurch gekennzeichnet, dass** die Verbindung zwischen dem Walkkörper (7; 8; 19) und den Innenseiten (9, 10; 11, 12; 20, 21) der Wände (3, 4; 5, 6; 17, 18) reib- und/oder formschlüssig erzeugt ist.

3. Strukturbauteil nach Anspruch 1 oder 2, **dadurch gekennzeichnet, dass** die Verbindung zwischen dem Walkkörper (8) und den Innenseiten (11, 12) der Wände (7, 8) durch eine Klebefügung bewirkt ist.

## Claims

1. Structural element for a motor vehicle, the structural element having a metallic basic body (2; 16) with two walls (3, 4; 5, 6; 17, 18) arranged at a distance from each other, and at least one flexing body (7; 8; 19) which is supported on the inner sides (9, 10; 11, 12; 20, 21) of the walls (3, 4; 5, 6; 17, 18), wherein the flexing body (7; 8; 19) and the inner sides (9, 10; 11, 12; 20, 21) of the walls (3, 4; 5, 6; 17, 18) are in contact with each other in a manner such that they are movable relative to each other, **characterized in that** the flexing body (8, 19) is formed by an elastic material tube (22) which is closed on all sides and the interior (23) of which is filled with gas.

2. Structural element according to Claim 1, **characterized in that** the connection between the flexing body (7; 8; 19) and the inner sides (9, 10; 11, 12; 20, 21) of the walls (3, 4; 5, 6; 17, 18) is produced such that it is frictional and/or form-fitting.

3. Structural element according to Claim 1 or 2, **characterized in that** the connection between the flexing body (8) and the inner sides (11, 12) of the walls (7, 8) is brought about by a glued joint.

## Revendications

1. Élément de structure pour un véhicule automobile, qui présente un corps de base métallique (2 ; 16) avec deux parois disposées à distance l'une de l'autre (3, 4 ; 5, 6 ; 17, 18) et au moins un corps de flexion (7 ; 8 ; 19) s'appuyant sur les faces intérieures (9, 10 ; 11, 12 ; 20, 21) des parois (3, 4 ; 5, 6 17, 18), le corps de flexion (7 ; 8 ; 19) et les faces intérieures (9, 10 ; 11, 12 ; 20, 21) des parois (3, 4 ; 5, 6 17, 18) se contactant mutuellement avec déplacement relatif, **caractérisé en ce que** le corps de flexion (8, 19) est formé d'un tuyau flexible (22) fermé de tous les côtés et en matériau élastique, tuyau dont l'espace intérieur (23) est rempli de gaz.

2. Élément de structure selon la revendication 1, **caractérisé en ce que** la liaison entre le corps de flexion (7 ; 8 ; 19) et les faces intérieures (9, 10 ; 11, 12 ; 20, 21) des parois (3, 4 ; 5, 6 17, 18) est produite par concordance de friction et/ou de formes.

3. Élément de structure selon la revendication 1 ou 2, **caractérisé en ce que** la liaison entre le corps de flexion (8) et les faces intérieures (11, 12) des parois (7, 8) est exercée par un joint collé.
